# EUROPÄISCHE PATENTSCHRIFT

(11) **EP 0 473 674 B1**
(45) Veröffentlichungstag und Bekanntmachung des Hinweises auf die Patenterteilung: **08.09.1993**
(21) Anmeldenummer: 90908469.1
(22) Anmeldetag: 28.05.1990
(51) Int. Cl.: G02B 27/14

(54) **STRAHLENTEILER ZUR TEILUNG EINES OPTISCHEN STRAHLENGANGS**
BEAM SPLITTER FOR SPLITTING AN OPTICAL BEAM PATH
DIVISEUR DE FAISCEAU POUR DIVISER UNE TRAJECTOIRE DE FAISCEAU OPTIQUE

(30) Priorität: 26.05.1989 DE 3917200; 26.05.1989 DE 3917198
(43) Veröffentlichungstag der Anmeldung: 11.03.1992
(73) Patentinhaber: ARNOLD & RICHTER CINE TECHNIK GMBH & CO. BETRIEBS KG., D-80799 München (DE)
(72) Erfinder: WALLNER, Kurt, D-8057 Dietersheim (DE)
(74) Vertreter: Ninnemann, Detlef, Dipl.-Ing.
(86) Internationale Anmeldenummer: DE9000406
(87) Internationale Veröffentlichungsnummer: WO9014609

(56) Entgegenhaltungen:
- EP-A- 0 039 944
- EP-A- 0 209 108
- DE-A- 3 038 389
- FR-A- 2 360 904
- US-A- 4 302 075
- US-A- 4 615 603

## Beschreibung

Die Erfindung betrifft einen Strahlenteiler zur Teilung eines optischen Strahlenganges gemäß dem Oberbegriff des Anspruchs 1.

Strahlenteiler werden vielfach in optischen Geräten eingesetzt und dienen der Aufteilung eines einfallenden Strahlengangs in mindestens zwei austretende Teilstrahlengänge, die an mehrere voneinander unabhängige optische Systeme weitergeleitet werden.

Bei Laufbild-Filmaufnahmekameras erfolgt die Belichtung des Filmmaterials durch den durch das Aufnahmeobjektiv in die Kamera einfallenden Aufnahmestrahlengang, von dem durch eine rotierende Spiegelblende ein Sucherstrahlengang während des Filmtransports umgelenkt und zur Bildkontrolle durch den Kameramann in eine Sucheranordnung mit Okular geleitet wird. Zur Ausspiegelung von Videobildern ist im Sucherstrahlengang ein Strahlenteiler angeordnet, der einen Teil des Sucherstrahlenganges abspaltet und in eine Videoaufnahmeeinrichtung leitet.

Dabei sind zur Bildausspiegelung zwei hinsichtlich ihrer Wirkungsweise unterschiedliche Möglichkeiten der Teilung des Sucherstrahlengangs bekannt, nämlich die sogenannte "physikalische Teilung" und die "geometrische Teilung".

Aus der DE-PS 32 05 469 ist eine Kamera bekannt, bei der zur Auspiegelung eines von einer Fernsehkamera aufzunehmenden Fernsehbildes ein teilweise reflektierender Spiegel im Aufnahmestrahlengang ausgerichtet ist. Dieser teilweise reflektierende Spiegel arbeitet nach dem Prinzip der "physikalischen Teilung" und bewirkt, daß ein Teil der in die Kamera einfallenden Strählen zur Sucheranordnung der Kamera und der Rest in die mit der Kamera verbundene Fernsehkamera gelangt.

Aufgrund der nach der Teilung verbleibenden, stark reduzierten Lichtmenge für die Sucheranordnung nimmt der Kameramann das in der Sucherbildebene erzeugte Sucherbild nur mit stark verminderter Helligkeit durch das Okular wahr. Dies kann besonders bei schlecht ausgeleuchteten Aufnahmeobjekten oder geringer Umgebungshelligkeit zu Fehlern bei der Bestimmung des Aufnahmebildausschnitts führen.

Bei der "geometrischen Teilung" des Sucherstrahlenganges wird so verfahren, daß zwei konzentrische, zueinander um 90° versetzte Spiegelflächen im Sucherstrahlengang angeordnet sind, wobei die innere Spiegelfläche einen Teil der längs des Sucherstrahlengangs einfallenden Strahlen in das Okular weiterleitet und die äußere Spiegelfläche den übrigen Strahlenanteil zur Videokamera führt. Durch die beiden zueinander versetzten Spiegel wird demnach eine geometrische Aufteilung des in die Sucheranordnung einfallenden Strahlenquerschnitts vorgenommen.

Aufgrund der "geometrischen Teilung" des Sucherstrahlengangs ist die Augenpupille bei der Betrachtung des Sucherbilds nur so groß wie die innere Spiegelfläche, so daß das volle Sucherbild nur bei einem zentrischem Blickwinkel in den Sucher erfaßt wird, während bei einem seitlichen Blickwinkel nur jeweils ein Teil des Sucherbildes erfaßt wird. Für die Videokamera bedeutet jedoch das zentrische Auskoppeln eines Teils des Strahlengangs einen erheblichen Helligkeitsverlust in der Mitte des Bildes.

Aus der DE-OS 30 38 389 ist eine Sucheranordnung für eine Aufnahmekamera bekannt, bei welcher der durch die Aufnahmeoptik einfallende Strahlengang durch eine Spiegelreflexeinrichtung alternierend auf einen zu belichtenden Film oder die Sucheranordnung geleitet wird.

Im Sucherstrahlengang ist eine Mattscheibe angeordnet, deren Bild über ein Sucherokular betrachtet werden kann. Im Strahlengang zwischen der Mattscheibe und dem Sucherokular ist ein optisches Einblendsystem vorgesehen, das einerseits die Betrachtung des Mattscheibenbildes durch das Sucherokular und andererseits die Abbildung einer Mattscheibenmarkierung bzw. einer Kombination mehrerer Markierungen erlaubt.

Das Einblendsystem besteht aus einem halbdurchlässigen Spiegel oder einem Prisma. Die Projektion der Mattscheibenmarkierung auf die Mattscheibe erfolgt mittels eines Projektionsgerätes, das aus einem Projektionsobjektiv, einem Kondensor und einer Lichtquelle sowie einem Parabolspiegel besteht, unter Verwendung eines Stehbildes. Dieses Stehbild besteht aus dem Negativbild der Mattscheibenmarkierung bzw. einer Kombination mehrerer Mattscheibenmarkierungen.

Durch die Verwendung eines halbdurchlässigen Spiegels oder eines Prismas als optisches Einblendsystem wird jedoch ein erheblicher Teil des durch die Aufnahmeoptik auf die Mattscheibe fallenden Lichtes des aufzunehmenden Objektes ausgeblendet, so daß eine Bildbetrachtung zur Fokussierung und Auswahl des Bildausschnittes insbesondere bei schlechten Lichtverhältnissen erheblich erschwert bzw. unmöglich gemacht wird. Zwar erlaubt die Projektion der Mattscheibenmarkierung auch bei schlechten Lichtverhältnissen eine exakte Festlegung des Bildausschnittes, jedoch verschwindet bei entsprechend schlechten Lichtverhältnissen das Bild selbst nahezu vollständig, so daß unter ungünstigen Bedingungen keine Aufnahmen möglich sind.

Aus der DE-PS 27 34 792 ist ein Suchersystem für Kameras bekannt, das eine Mattscheibe aufweist, auf die ein Abbild der aufzunehmenden Szene in Abhängigkeit von der Stellung einer Drehblende projiziert wird, die mit der Bewegung des Films synchronisiert ist. Die Mattscheibe weist eine als Umgrenzungslinie ausgebildete Markierungsanordnung auf, die zwei rechteckige Bildfenster ausbilden. Im Sucherstrahlengang ist ein Strahlenteiler angeordnet, der die Betrachtung des auf die Mattscheibe projizierten Bildes über eine Okularanordnung ermöglicht. Auf der anderen Seite des Strahlenteilers ist eine Lichtquellenanordnung vorgesehen, die durch den Strahlenteiler die auf der dem Strahlenteiler zugewandten Seite der Mattscheibe vorgesehene Markierungsanordnung beleuchtet.

Auch bei dieser bekannten Sucheranordnung geht ein erheblicher Teil des nutzbaren Objektlichtes infolge der Verwendung eines halbdurchlässigen Strahlenteilers verloren, so daß unter ungünstigen Lichtverhältnissen zwar eine Beleuchtung der Markierungsanordnung der Mattscheibe gegeben ist, das auf die Mattscheibe projizierte Bild des aufzunehmenden Objekts jedoch nicht mehr erkennbar ist.

Aus der EP-A-0209108 ist ein als Sammellinse ausgebildetes optisches Element bekannt, das aus zwei an einer Fügefläche zusammengefügten Teilen besteht. Auf der Fügefläche ist eine Strahlenteilerschicht in Form einer Ellipse aufgebracht, während der verbleibende Bereich der Fügefläche eine Antireflexschicht trägt. Die in die Sammellinse einfallenden Strahlen gehen außerhalb der Strahlenteilerschicht durch die Sammellinse hindurch und werden an der Strahlenteilerschicht teilweise ausgespiegelt.

Würde man ein derartiges optisches Element in den Strahlengang einer Filmaufnahmekamera anordnen, um einen Teil der einfallenden Strahlen zu einem Betrachtungsokular zu leiten und einen anderen Strahlenanteil zu einer Videokamera zu führen, so hätte dies zur Folge, daß bei Anordnung des Okulars im durchgehenden Stahlengang dem Betrachter gerade der wesentliche Mittenbereich abgedunkelt erscheint, da hier ein Teil der einfallenden Strahlen umgelenkt wird, während eine im ausgespiegelten Strahlengang angeordnete Videokamera nur den abgedunkelten Mittenbereich empfangen würde.

Würde umgekehrt das Okular im ausgespiegelten Strahlengang angeordnet, so könnte durch dieses nur der abgedunkelte Mittenbereich betrachtet werden, wobei bei einer Bewegung des Auges außerhalb des Mittenbereichs kein Bild mehr zu sehen wäre. Eine in diesem Fall im durchgehenden Strahlengang angeordnete Videokamera würde dementsprechend nur einen abgedunkelten Mittenbereich empfangen.

Die aus der DE-C-3205469 bekannte Problematik läßt sich somit auch durch dieses bekannte optische Element nicht lösen.

Der Erfindung liegt die Aufgabe zugrunde, einen Strahlenteiler zu schaffen, der bei einer Teilausspiegelung einfallender Strahlen ein gegenüber dem Aufnahmebild der Kamera in seiner Helligkeit nur unwesentlich reduziertes und im Bildausschnitt vollständiges Sucherbild auch bei seitlichem Einblick in das Sucherokular ermöglicht und bei dem auch bei ungünstigen Lichtverhältnissen sowohl die Markierung des Bildfeldes im Sucherfenster eines optischen Gerätes als auch das zu betrachtende Objekt sichtbar bleibt.

Diese Aufgabe wird erfindungsgemäß durch das kennzeichnende Merkmal des Anspruchs 1 gelöst.

Der Erfindung liegt der Gedanke zugrunde, daß es bei der Erzeugung eines Sucherbildes aus einem Anteil des in den Strahlenteiler einfallenden Strahlengangs vor allem darauf ankommt, dem Betrachter des Sucherbildes einen korrekten Eindruck über den tatsächlich durch die Positionierung des Aufnahmeobjektivs bestimmten Bildausschnitts zu geben und durch eine genügende Sucherbildhelligkeit eine einfache Fokussierung und Festlegung des Bildausschnitts zu ermöglichen.

Da es zur Fokussierung und Festlegung des Bildausschnitts jedoch nicht notwendig ist, daß sich das Sucherbild durch eine gleichmäßige Helligkeitsverteilung auszeichnet, sondern ausreichend ist, durch einen in seiner Helligkeit gegenüber dem Aufnahmebild im wesentlichen nicht reduzierten Teilbereich des Sucherbildes eine genaue Fokussierung und Bestimmung des Bildausschnitts zu ermöglichen.

Die erfindungsgemäße Aufteilung der reflektierenden Beschichtung der Strahlenteilerfläche in-einen Innenbereich und einen den Innenbereich angebenden teilreflektierenden Außenbereich schafft die Möglichkeit, einen der reduzierten Helligkeit eines Teilbereichs des Sucherbildes entsprechenden Anteil des Strahlenganges abzuspalten und für andere Zwecke, beispielsweise zur Ausspiegelung von Videobildern zu benutzen, ohne daß hiermit wesentliche Einbußen in der Qualität des Sucherbildes verbunden wären.

Vorteilhafterweise ergibt sich aufgrund des in seinem Bildausschnitt mit dem Aufnahmebild übereinstimmenden Sucherbildes keine, den möglichen Blickwinkel des Betrachters in das Okular einschränkende Pupillenwirkung des Strahlenteilers. Dies ermöglicht eine größere Mobilität bei der Betrachtung des Sucherbildes durch das Okular, da das Auge des Betrachters nicht unbedingt mit der optischen Achse der Sucheranordnung auszurichten ist, um das Sucherbild wahrnehmen zu können.

Nach einer vorteilhaften Weiterbildung sind der Innenbereich und der teilreflektierende Außenbereich der reflektierenden Beschichtung des Strahlenteilers konzentrisch zum Durchstoßpunkt als Auftreffpunkt der optischen Achse des einfallenden Strahlengangs angeordnet, wobei der Innenbereich die Kontur einer zentrisch zum Durchstoßpunkt ausgerichteten Ellipse aufweist.

Durch die zentrische Anordnung des Innenbereichs wird erreicht, daß auch bei versetzt oder winklig zur optischen Achse der Sucheranordnung erfolgender Betrachtung des Sucherbildes in jedem Fall der hellere, zur Fokussierung geeignete innere Bereich des Sucherbildes wahrgenommen wird.

Dabei kann der Innenbereich wahlweise vollständig reflektierend oder voll durchsichtig ausgebildet sein. Die Wahl hängt von der Anordnung des Suchers in Bezug auf die Aufnahmeoptik ab. Ist der Sucher auf der der Aufnahmeoptik entgegengesetzten Seite des Strahlenteilers angeordnet, so wird der Innenbereich vollständig durchlässig ausgebildet sein, während bei auf gleicher Seite angeordneter Aufnahmeoptik und Sucher ein vollständig reflektierender Innenbereich gewählt wird. In diesem Falle wird der Strahlengang im Innenbereich von der Aufnahmeoptik zum Sucherstrahlengang umgelenkt.

Durch die elliptische Ausbildung des Innenbereichs wird erriecht, daß die senkrecht zum Sucherstrahlengang projizierte Abbildung der Fläche des Innenbereichs infolge der Neigung des Strahlenteilers einen Kreis ergibt. Hierdurch ist auch der innere, helle Bildbereich des Sucherbildes kreisförmig, so daß mit Hilfe des kreisförmigen Sucherbildbereichs eine exakte Ausrichtung des optischen Geräts, insbesondere einer Laufbildkamera, auf das abzubildende Aufnahmeobjekt möglich ist.

Vorteilhafterweise ist der Grundkörper des Strahlenteilers als Planlinse ausgebildet. Hierdurch ist eine besonders einfache Realisierung des Strahlenteilers ermöglicht.

Gemäß einer vorteilhaften Weiterbildung weist der Außenbereich einen Reflexionsgrad von 10% bis 90% auf, wobei der Innenbereich vollständig lichtdurchlässig ausgebildet ist. In Verbindung mit dem nichtreflektierenden Innenbereich des Strahlenteilers wird somit dem Betrachter ein insgesamt ausreichender Helligkeitseindruck des Sucherbildes vermittelt. Für den vom Strahlenteiler abgeteilten Teilstrahlengang verbleiben demnach 90% bis 10% der in den Außenbereich des Strahlenteilers einfallenden Lichtmenge.

In einer alternativen Ausführungsform weist der Außenbereich einen Reflexionsgrad von 10% bis 90% auf, wobei der Innenbereich vollständig reflektierend ausgebildet ist. Diese Ausführungsform ist für Laufbildkameras bestimmt, deren Sucher und Aufnahmeoptik auf der gleichen Seite in bezug auf den Strahlenteiler angeordnet sind.

Weitere vorteilhafte Ausgestaltungen der Erfindung sind in den Unteransprüchen gekennzeichnet.

Die Erfindung wird nachstehend an Hand der in der Zeichnung dargestellten Ausführungsbeispiele näher erläutert.
Es zeigen:
- Figur 1: eine Seitenansicht einer Laufbildkamera mit einer Sucheranordnung und schematischer Darstellung des optischen Systems;
- Figur 2: eine Teildarstellung der Laufbildkamera gemäß Figur 1 in Rückansicht;
- Figur 3: eine Teildarstellung der Laufbildkamera in Draufsicht;
- Figur 4: eine Draufsicht auf einen Strahlenteiler;
- Figur 5: eine schematische Darstellung einer Okularanordnung mit einem Strahlenteiler mit unterschiedlichem Reflexionsgrad und einer Leuchtrahmenanordnung;
- Figur 6: ein Draufsicht auf den Strahlenteiler mit Abbildung des Leuchtrahmens und
- Figur 7: eine schematische Darstellung der Bildbetrachtung durch das Sucherokular.

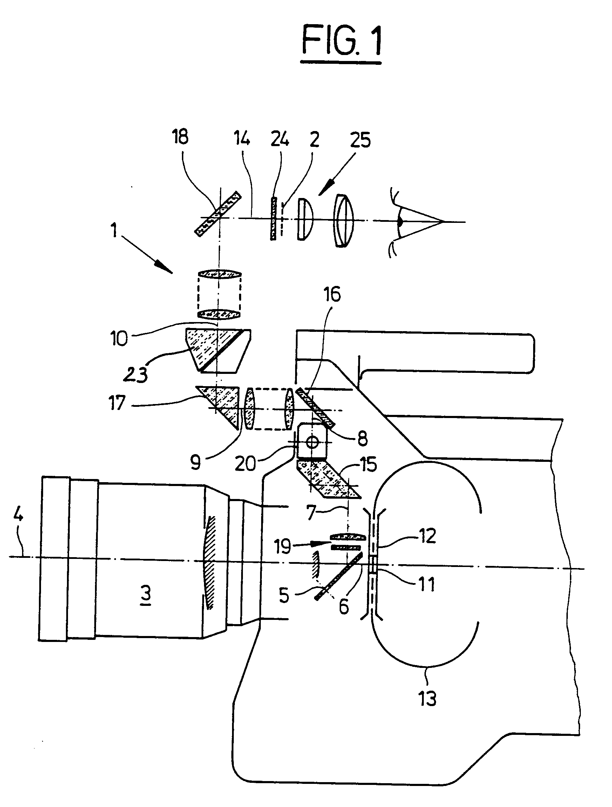

Figur 1 zeigt eine schematische Darstellung des optischen Systems der Sucheranordnung 1 einer Laufbildkamera.

Zur Erzeugung eines Sucherbildes 2 wird ein durch ein Aufnahmeobjektiv 3 in die Kamera eintretender Aufnahmestrahlengang 4 über eine rotierende Spiegelblende 5 in einen Filmbelichtungsanteil 6 und einen Sucherstrahlengang 7, 8, 9, 10, 14 aufgeteilt. Hierbei trifft der Filmbelichtungsanteil 6 durch ein Bildfenster 11 auf einen in einem Filmkanal 12 geführten, zu belichtenden Film 13.

Der von der Spiegelblende 5 aus dem Aufnahmestrahlengang 4 abgespaltene Sucherstrahlengang 7, 8, 9, 10, 14 wird durch mehrere im Strahlengang 7, 8, 9, 10, 14 angeordnete Umlenkeinrichtungen 15, 16, 17, 18, 23 umgelenkt. Hierbei tritt der Sucherstrahlengang 7 zunächst durch eine Mattscheibe oder Faserplatte 19, um dann als Sucherstrahlengang 8 parallel versetzt zum Sucherstrahlengang 7 durch die Umlenkeinrichtung 15 in einen Strahlenteiler 20 einzufallen.

Nach Umlenkung durch die Umlenkeinrichtung 16 wird der Sucherstrahlengang 9 durch ein erstes Abbildungssystem 21 geleitet und nach weiterer Umlenkung durch die nachgeordnete Umlenkeinrichtung 17 als Sucherstrahlengang 10 durch ein zweites Abbildungssystem 22 geführt.

Dem Abbildungssystem 22 vorgeordnet befindet sich eine weitere Umlenkeinrichtung 23, die als mechanisch drehbares, eine Bilddrehung verhinderndes Kompensationsmittel in Form eines Geradsicht-Prismas ausgebildet ist.

Der Sucherstrahlenengang 10 erfährt schließlich durch die Umlenkeinrichtung 18 eine letzte Umlenkung, um als Sucherstrahlengang 14 eine Planscheibe 24 und schließlich ein Okular 25 zu durchtreten. Das Okular 25 ermöglicht dabei die Betrachtung des zwischen der Planscheibe 24 und dem Okular 25 als Luftbild erzeugten Sucherbildes 2.

Der im Sucherstrahlengang 8 zwischen den Umlenkeinrichtungen 15, 16 angeordnete Strahlenteiler 20 spaltet aus dem Sucherstrahlengang 8 einen Videostrahlengang 26, 27, 28 ab zur Erzeugung eines Videobildes in einer mit der Laufbild-Spiegelreflexkamera verbundenen Videokamera 29.

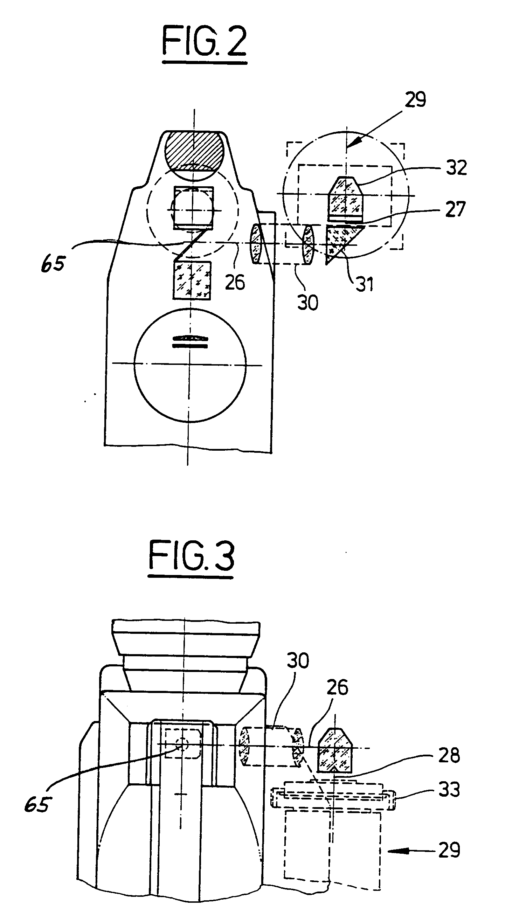

Hierzu wird der in den Figuren 2 und 3 dargestellte Videostrahlengang 26, 27, 28 durch ein Abbildungssystem 30 und zwei Umlenkeinrichtungen 31, 32 geleitet. Die Verbindung der Videokamera 29 mit der Laufbildkamera erfolgt über eine Flanschverbindung 33.

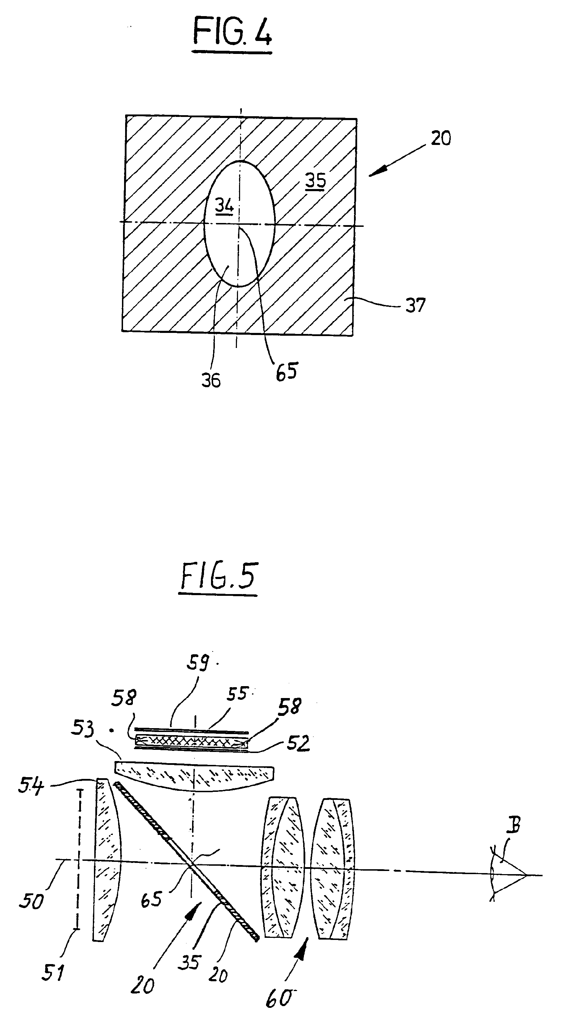

Erfindungsgemäß weist der in Figur 4 in einer Draufsicht dargestellte, im Sucherstrahlengang 8 (Figur 1) zwischen den Umlenkeinrichtungen 15 und 16 angeordnete Strahlenteiler 20 zwei Bereiche, nämlich einen Innenbereich 34 und einen Außenbereich 35, mit unterschiedlichem Reflexionsgrad auf. Der Innenbereich 34 und der Außenbereich 35 sind konzentrisch zur durch den Strahlenteiler 20 hindurchtretenden optischen Achse bzw. zum Sucherstrahlengang 8 ausgerichtet.

Der Außenbereich 35 ist als semipermeabler Spiegel auf einer als Grundkörper dienenden Planlinse 37 ausgebildet. Der Innenbereich 34 ist von der bspw. durch Bedampfung aufgetragenen Verspiegelung ausgenommen und läßt den Sucherstrahlengang 8 ungebrochen durch den Strahlenteiler 20 hindurchtreten, so daß lediglich die den Außenbereich 35 durchtretenden Lichtstrahlen anteilig reflektiert werden und so den Videostrahlengang 26, 27, 28 bilden.

Der Innenbereich 34 weist eine elliptische Kontur auf, die infolge der 45°-Schrägstellung des Strahlenteilers 20 in der Projektion senkrecht zum Sucherstrahlengang 8 kreisrund wird. Daher ist das bezüglich der Bildhelligkeit im wesentlichen mit dem im Bildfenster 11 erzeugten Aufnahmebild übereinstimmende Zentrum des durch das Okular 25 wahrnehmbaren Sucherbildes 2 als Kreis ausgebildet.

Das Sucherbild 2 weist für den Betrachter unterschiedliche Helligkeitsbereiche auf, die in ihrer Verteilung dem zentrischen Innenbereich 34 und dem diesen umgebenden Außenbereich 35 entsprechen. Die Verwendung eines mit einem nichtreflektierenden Innenbereich 34 und einem zu 50% reflektierenden Außenbereich 35 versehenen Strahlenteilers 20 ermöglicht dem Betrachter aufgrund des helleren inneren Bildbereichs eine einfache und genaue Fokussierung sowie Auswahl des Bildausschnitts des anvisierten Aufnahmeobjekts.

Das gewählte Größenverhältnis sowie der Reflexions- oder Durchlässigkeitsgrad von Innenbereich 34 und Außenbereich 35 ist im wesentlichen abhängig von der zum Videobildaufbau und Bildbetrachtung erforderlichen Lichtmenge.

Natürlich sind auch andere Formen und kontinuierliche oder abgestufte Verteilungen von Bereichen mit unterschiedlichem Reflexionsgrad denkbar. Auch besteht etwa die Möglichkeit, den Außenbereich 35 als lichtdurchlässig und den Innenbereich als reflektierend vorzusehen.

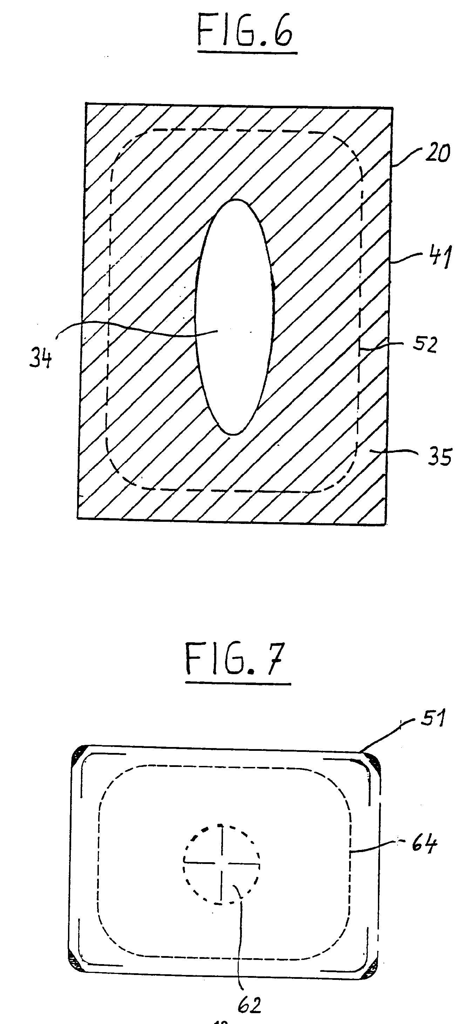

Die in Figur 5 schematisch dargestellte Okularanordnung kann in einem beliebigen optischen Gerät zur Betrachtung eines abzubildenden Objektes, vorzugsweise in einer Laufbild-Filmaufnahmekamera eingesetzt werden. Das von einer Aufnahmeoptik erfaßte Objekt wird als Luftbild oder auf einer Mattscheibe in der Ebene 51 abgebildet.

Bei Verwendung der Okularanordnung in einer Laufbild-Filmaufnahmekamera ist der Aufnahmeoptik eine Umlaufblende nachgeordnet, die mit der Filmbewegung synchronisiert ist, so daß ein Abbild einer aufzunehmenden Szene abwechselnd auf einen hinter der Umlaufblende bewegten Film projiziert oder auf die Luftbildebene 51 reflektiert wird.

Die Okularanordnung besteht im wesentlichen aus einem Strahlenteiler 20, einer mittig zum Sucherstrahlengang 50 hinter der Luftbildebene 51 angeordneten ersten Feldlinse 54 sowie einem auf der anderen Seite des Strahlenteilers 20 angeordneten Sucherokular 60, mit dem die Bildschärfe auf die Luftbildebene 51 fokussiert wird.

Auf derselben Seite des Strahlenteilers 20, auf der das Sucherokular 60 angeordnet ist, ist ebenfalls eine Leuchtrahmenanordnung vorgesehen, die eine zweite Feldlinse 53 aufweist, die im gleichen Abstand zum Strahlenteiler 20 angeordnet ist wie die erste, das Luftbild projizierende Feldlinse 54. Eine Leuchtrahmenmaske 52 enthält in Positiv- oder Negativdarstellung eine als Umgrenzungslinien ausgebildete Markierungsanordnung, die ein Bildfenster und gegebenenfalls ein Haarkreuz zur Fokussierung aufweist.

Hinter der Leuchtrahmenmaske 52 ist eine Streuscheibe 55 vorgesehen, in der wahlweise verteilt angeordnete Leuchtdioden 58 oder eine konzentrische Beleuchtungseinrichtung integriert werden kann. Alternativ hierzu können auf der der Leuchtrahmenmaske 52 gegenüberliegenden Seite der Streuscheibe 55 eine Beleuchtungseinrichtung 56 oder selbstleuchtende, durch Tageslicht aktivierbare Elemente, z.B Beta-Lichter, angeordnet werden.

Zu einer beliebigen farbigen Gestaltung der Leuchtrahmenmaske 52 besteht die Möglichkeit, farbige Blätter 59, die z.B. aus Kunststoff bestehen können, rückwärtig an der Streuscheibe 55 zu befestigen, um einen entsprechend farbigen Leuchtrahmen bei der Projektion auf den Strahlenteiler 20 zu erzeugen.

Der Strahlenteiler 20 weist wie in den vorstehend beschriebenen Ausführungsbeispielen zum Ausspiegeln eines Teils des Strahlengangs in beispielsweise eine Videokamera mehrere Bereiche mit unterschiedlichem Reflexions- bzw. Durchlässigkeitsgrad auf. In der in Figur 5 dargestellten Ausführungsform weist der Strahlenteiler 20 einen Innenbereich 34 und einem Außenbereich 35 mit unterschiedlichem Reflexions- bzw. Durchlässigkeitsgrad auf, wobei der Innenbereich 34 und der Außenbereich 35 konzentrisch zur durch den Strahlenteiler 20 hindurchtretenden optischen Achse bzw. zum Sucherstrahlengang ausgerichtet sind.

Der Innenbereich 34 ist wahlweise nichtreflektierend bzw. vollständig durchlässig oder vollständig reflektierend ausgebildet. Die Wahl hängt von der Anordnung des Suchers in Bezug auf die Aufnahmeoptik ab. Ist der Sucher auf der der Aufnahmeoptik entgegengesetzten Seite des Strahlenteilers angeordnet, so wird der Innenbereich vollständig durchlässig ausgebildet sein, während bei auf gleicher Seite angeordneter Aufnahmeoptik und Sucher ein vollständig reflektierender Innenbereich gewählt wird. In diesem Falle wird der Strahlengang im Innenbereich von der Aufnahmeoptik zum Sucherstrahlengang umgelenkt. Der Außenbereich 35 ist teilreflektierend bzw. teildurchlässig ausgebildet.

Der Strahlenteiler 20 kann als bedampfter Teilerspiegel ausgebildet sein, wobei durch den Bedampfungsgrad der Reflexions- bzw. Durchlässigkeitsgrad des Spiegels festgelegt wird.

In der in Figur 5 dargestellten Ausführungsform weist der Außenbereich 35 beispielsweise einen Reflexionsgrad von 10% auf, so daß 10% des von der Leuchtrahmenanordnung auf den Strahlenteiler 20 projizierten Lichtes in Richtung auf das Sucherokular 60 reflektiert wird. Im Außenbereich 35 treten 90% des mittels der Feldlinse 54 abgebildeten Luftbildes 51 durch den Strahlenteiler 20 hindurch und werden vom Betrachter B über das Sucherokular 60 wahrgenommen.

Die unterschiedliche Ausbildung der einzelnen Bereiche des Strahlenteilers 20 kann in der Weise erfolgen, daß der Innenbereich 34 bei der Herstellung des Strahlenteilers 20 abgedeckt und der Außenbereich je nach dem gewünschtem Reflexionsgrad bedampft wird. Auf gleiche Weise können weitere Bereiche mit unterschiedlichem Reflexions- bzw. Durchlässigkeitsgrad des Strahlenteilers 20 hergestellt werden.

Alternativ kann der Außenbereich 35 bei nicht abgedecktem Innenbereich 34 je nach dem gewünschtem Reflexionsgrad bedampft werden und daran anschließend der Innenbereich 34 bei der Herstellung des Strahlenteilers 20 vollständig bedampft werden, um einen vollständig reflektierenden Innenbereich 34 zu erzielen.

In einer alternativen Ausführungsform ist der Außenbereich 35 als semipermeabler Spiegel auf einer als Grundkörper dienenden Planlinse ausgebildet. Der Innenbereich 34 ist von der bspw. durch Bedampfung aufgetragenen Verspiegelung ausgenommen und läßt den Sucherstrahlengang ungebrochen durch den Strahlenteiler 20 hindurchtreten, so daß lediglich die den Außenbereich 35 durchtretenden Lichtstrahlen anteilig zu einem gewünschten Prozentsatz reflektiert bzw. durchgelassen werden.

Gemäß Figur 6 weist der Innenbereich 34 eine elliptische Kontur auf, die infolge der 45°-Schrägstellung des Strahlenteilers 20 in der Projektion senkrecht zum Sucherstrahlengang kreisrund wird. Daher ist das bezüglich der Bildhelligkeit im wesentlichen mit dem im Bildfenster erzeugten Aufnahmebild übereinstimmende Zentrum des durch das Sucherokular 60 wahrnehmbaren Sucherbildes als Kreis ausgebildet.

Das Sucherbild weist für den Betrachter unterschiedliche Helligkeitsbereiche auf, die in ihrer Verteilung dem zentrischen Innenbereich 34 und dem diesen umgebenden Außenbereich 35 entsprechen. Die Verwendung eines mit einem nichtreflektierenden Innenbereich 34 und einem teilreflektierenden Außenbereich 35 versehenen Strahlenteilers 20 ermöglicht dem Betrachter B aufgrund des helleren, inneren Bildbereichs eine einfache und genaue Fokussierung sowie Auswahl des Bildausschnittes des anvisierten Aufnahmeobjekts.

Zusätzlich zeigt Figur 6 die Abbildung der Leuchtrahmenmaske 52 auf dem teilreflektierenden Außenbreich 35 des Strahlenteilers 20.

Figur 7 zeigt die für den Betrachter B durch das Sucherokular 60 gemäß Figur 1 sichtbare Projektion der Leuchtrahmenmaske 52 auf ein durch das Sucherokular 60 sichtbares Sucherbild 51.

Das Sucherbild 51 weist für den Betrachter unterschiedliche Helligkeitsbereiche auf, die in ihrer Verteilung dem zentrischen Innenbereich 34 und dem diesen umgebenden Aussenbereich 35 entsprechen. Infolge der Projektion des um 45° zur optischen Achse geneigten Strahlenteilers 20 wird dabei der an sich mit einer elliptischen Kontur versehene Innenbereich 34 zu einem kreisförmigen Bildbereich 62 im Sucherbild 51.

Da der Abstand der Leuchtrahmenmaske 52 bzw. der Feldlinse 53 zum Durchstoßpunkt der optischen Achse gleich dem Abstand der Feldlinse 54 zur Projektion des Luftbildes 51 ist, ergibt sich eine scharfe Abbildung sowohl der Leuchtrahmenmaske 52 als auch des Sucherbildes 51 bei der Betrachtung durch das Sucherokular 60.

Die Verwendung eines mit einem nichtreflektierenden Innenbereich 34 und einem zu bspw. 10% reflektierenden Außenbereich 35 versehenen Strahlenteilers 20 ermöglicht dem Betrachter aufgrund des helleren inneren Bildbereiches 62 gemäß Figur 3 eine einfache und genaue Fokussierung sowie Bildbetrachtung und Auswahl des Objektfeldes. Gleichzeitig wird in einem gewünschten Maße die Leuchtrahmenmaske von dem Sucherbild überlagert, so daß sich auch bei sehr ungünstigen Lichtverhältnissen eine genaue Umgrenzung des ausgewählten Bildfeldes für den Betrachter ergibt. Das Maß der Lichtstärke der überlagerten Leuchtrahmenmaske hängt zum einen von der Beleuchtung der Leuchtrahmenmaske 52 gemäß Figur 1 selbst und vom Reflexionsgrad des Außenbereichs 35 des Strahlenteilers 20 ab.

Bei Verwendung einer direkt oder indirekt beleuchteten Leuchtrahmenmaske kann der Helligkeitsgrad der überlagerten Leuchtrahmenanordnung durch entsprechende Variation der Lichtstärke der Leuchtelemente verändert werden. Bei Verwendung von durch Tageslicht aktivierbaren Elementen kann durch Abdeckung der Elemente bspw. durch Verwendung einer jalousieartigen Verstelleinrichtung der gewünschte Helligkeitsgrad eingestellt werden.

In gleicher Weise können auch unterschiedlich farbige Blätter der Streuscheibe 55 unterlegt werden, so daß eine gewünschte Farbe des eingeblendeten Leuchtrahmens ausgewählt werden kann.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch machen.

## Patentansprüche

1. Strahlenteiler (20) zur Teilung eines optischen Strahlengangs, insbesondere zur Ausspiegelung eines Strahlengangs (26, 27, 28) innerhalb eines Sucherstrahlengangs (8) einer Videokamera (29), mit einer Strahlenteilerfläche, auf der eine reflektierende Beschichtung derart aufgebracht ist, daß sich ein Innenbereich (34) und ein den Innenbereich umgebender Außenbereich (35) mit gegenüber dem Innenbereich (34) unterschiedlichem Reflexionsgrad ergibt,
**dadurch gekennzeichnet,**
daß die reflektierende Beschichtung aus einer teilreflektierenden Schicht besteht, die im Außenbereich (35) vorgesehen ist.

2. Strahlenteiler nach Anspruch 1, **dadurch gekennzeichnet,** daß der Innenbereich (34) vollständig lichtdurchlässig ausgebildet ist und der Außenbereich (35) einen Reflexionsgrad von 10% bis 90% aufweist.

3. Strahlenteiler nach Anspruch 1, **dadurch gekennzeichnet,** daß der Innenbereich (34) vollständig reflektierend ausgebildet ist und der Außenbereich (35) einen Reflexionsgrad von 90% bis 10% aufweist.

4. Strahlenteiler nach einem der vorstehenden Ansprüche, **dadurch gekennzeichnet,** daß der Innenbereich (34) und der Außenbereich (35) konzentrisch zum Durchstoßpunkt (65) als Auftreffpunkt der optischen Achse des einfallenden Strahlengangs (8) angeordnet sind, und daß der Innenbereich (34) die Kontur einer zentrisch zum Durchstoßpunkt (65) ausgerichteten Ellipse aufweist.

5. Strahlenteiler nach einem der vorangehenden Ansprüche, **dadurch gekennzeichnet,** daß der Strahlenteiler (20) als Spiegel oder als Planlinse ausgebildet ist.

6. Strahlenteiler nach einem der vorangehenden Ansprüche, **dadurch gekennzeichnet,** daß der Außenbereich (35) über seine Fläche einen konstanten Reflexionsgrad aufweist.

7. Strahlenteiler nach Anspruch 2 oder 3, **dadurch gekennzeichnet,** daß der Außenbereich (35) über seine Fläche verteilt einen unterschiedlichen Reflexionsgrad aufweist.

## Claims

1. Beam splitter (20) for dividing up an optical beam path, more particularly for reflecting a beam path (26,27,28) inside a viewfinder beam path (8) of a video camera (29), with a beam splitter surface on which a reflective coating is applied so that an inner area (34) is formed and an outer area (35) enclosing the inner area is produced which has a different degree of reflection from the inner area (34),
characterised in that
the reflective coating consists of a partially-reflecting layer which is provided in the outer area (35).

2. Beam splitter according to claim 1 characterised in that the inner area (34) is completely light permeable and the outer area (35) has a degree of reflection of 10 to 90%.

3. Beam splitter according to claim 1 characterised in that the inner area (34) is made completely reflecting and the outer area (35) has a degree of reflection of 90 to 10%.

4. Beam splitter according to one of the preceding claims, characterised in that the inner area (34) and the outer area (35) are arranged concentric with the breakthrough point (65) as strike point of the optical axis of the incident beam path (8) and that the inner area (34) has the shape of an ellipse aligned centrally with the breakthrough point (65).

5. Beam splitter according to one of the preceding claims, characterised in that the beam splitter (20) is designed as a mirror or as a flat lens.

6. Beam splitter according to one of the preceding claims, characterised in that the outer area (35) has a constant degree of reflection over its surface.

7. Beam splitter according to claim 2 or 3 characterised in that the outer area (35) has a different degree of reflection spread out over its surface.

## Revendications

1. Diviseur de faisceau (20) pour diviser une trajectoire de faisceau optique, en particulier pour une réflexion d'une trajectoire de faisceau (26, 27, 28) à l'intérieur d'une trajectoire de faisceau de viseur (8) d'une caméra vidéo (29), comprenant une surface de diviseur de faisceau sur laquelle un revêtement réflecteur est appliqué de façon à obtenir une zone interne (34) et une zone externe (35) entourant la zone interne et présentant un degré de réflexion différent de la zone interne (34),
caractérisé en ce que le revêtement réflecteur est constitué d'une couche partiellement réflectrice qui est prévue dans la zone externe (35).

2. Diviseur de faisceau suivant la revendication 1, caractérisé en ce que la zone interne (34) est réalisée sous une forme totalement transparente et en ce que la zone externe (35) présente un degré de réflexion de 10 % à 90 %.

3. Diviseur de faisceau suivant la revendication 1, caractérisé en ce que la zone interne (34) est réalisée sous une forme totalement réflectrice et en ce que la zone externe (35) présente un degré de réflexion de 90 % à 10 %.

4. Diviseur de faisceau suivant l'une quelconque des revendications précédentes, caractérisé en ce que la zone interne (34) et la zone externe (35) sont agencées de manière concentrique au point de percée (65) en tant que point d'impact de l'axe optique de la trajectoire de faisceau incident (8) et en ce que la zone interne (34) présente le contour d'une ellipse orientée avec son centre au point de percée (65).

5. Diviseur de faisceau suivant l'une des revendications précédentes, caractérisé en ce que le diviseur de faisceau (20) est réalisé sous la forme d'un miroir ou sous la forme d'une lentille plane.

6. Diviseur de faisceau suivant l'une des revendications précédentes, caractérisé en ce que la zone externe (35) présente sur sa surface un degré de réflexion constant.

7. Diviseur de faisceau suivant l'une des revendications 2 et 3, caractérisé en ce que la zone externe (35) présente, de façon répartie sur sa surface, un degré de réflexion différent.
